# EUROPÄISCHE PATENTSCHRIFT

(11) **EP 0 590 510 B1**
(45) Veröffentlichungstag und Bekanntmachung des Hinweises auf die Patenterteilung: **09.04.1997**
(21) Anmeldenummer: 93115310.0
(22) Anmeldetag: 23.09.1993
(51) Int. Cl.: B60R 1/06

(54) **Aussenspiegel für Nutzfahrzeuge**
External rear-view mirror for trucks
Rétroviseur extérieur pour véhicule industriel

(30) Priorität: 02.10.1992 DE 4233255; 25.05.1993 DE 4317314
(43) Veröffentlichungstag der Anmeldung: 06.04.1994
(73) Patentinhaber: MEKRA Lang GmbH & Co. KG, D-90765 Fürth (DE)
(72) Erfinder: Lang, Heinrich, D-91465 Ergersheim (DE); Seiboth, Wolfgang, D-91438 Bad Windsheim (DE)
(74) Vertreter: Rau, Manfred, Dr. Dipl.-Ing.

(56) Entgegenhaltungen:
- EP-A- 0 352 762
- EP-A- 0 433 584
- DE-A- 3 040 284
- GB-A- 1 532 065
- US-A- 4 701 037
- US-A- 5 031 871

## Beschreibung

Die Erfindung betrifft einen Außenspiegel für Nutzfahrzeuge nach dem Oberbegriff der Ansprüche 1 bzw. 3.

Derartige, in der Regel sehr große Außenspiegel für Nutzfahrzeuge sind dem Fahrtwind ausgesetzt, wodurch die Benutzung des Spiegels stark erschwert wird, und zwar insbesondere, wenn die jeweilige Spiegelscheibe Vibrationen ausgesetzt ist.

Ein Lösungsansatz für diese Problematik ist bereits aus der DE-A 40 10 083 bekannt. Bei der dort gezeigten Spiegelkonstruktion besitzt das Gehäuse keine tragende Funktion mehr. Diese wird von einer Trägerplatte wahrgenommen, die mittels einer Haltevorrichtung an dem zur Befestigung des Spiegels am Nutzfahrzeug dienenden Halter befestigt ist. An dieser Trägerplatte sind das Gehäuse sowie die mindestens eine Spiegelscheibe des Außenspiegels und ein Verstellaggregat zu deren Positionseinstellung angebracht.

Nachteilig bei der in der vorgenannten Druckschrift gezeigten Konstruktion ist die Tatsache, daß die Trägerplatte und die Haltevorrichtung getrennte Bauteile sind, wodurch die Gefahr besteht, daß die stabile Befestigung der Trägerplatte am Halter beeinträchtigt wird. Dies ist insbesondere der Fall, wenn - wie im Ausführungsbeispiel der DE-A 40 10 083 gezeigt - das Gehäuse klemmend zwischen der Haltevorrichtung und der Trägerplatte gehalten ist, da sich in diesem Fall Gehäusevibrationen besonders leicht auf die Trägerplatte übertragen können.

Weiterhin hat der in der vorgenannten Druckschrift gezeigte Außenspiegel den Nachteil, daß er insbesondere im Bereich der Verbindung zwischen der Trägerplatte und der Haltevorrichtung konstruktiv aufwendig und nur mit erhöhtem Montageaufwand herstellbar ist.

Aus der gattungsgemäßen US-A-4,701,037 ist ferner ein Kraftfahrzeug-Außenspiegel bekannt, bei dem ein zur Karosserie führender Halterarm und eine daran über ein einstückig angeformtes Klemmlager befestigte Trägerplatte vorgesehen sind. An dieser wird ein Spiegel-Verstellaggregat und daran wiederum eine Spiegeltragplatte mit einer Spiegelscheibe montiert. Eine einteiliges Gehäuse ist an der Trägerplatte befestigt, wobei jedoch der Haltearm erst durch eine Öffnung gefädelt werden muß, bevor das Ende des Haltearms mit einer Hülse in das Klemmgegenlager der Trägerplatte eingesetzt werden kann. Alle weiteren Montagebauteile müssen danach sukzessive in das Gehäuse eingepaßt werden. Eine Vormontage von Baugruppen des Spiegels ist damit schwierig, was insgesamt die Montagefreundlichkeit des Spiegels gemäß US-A-4,701,037 beeinträchtigt.

Der Erfindung liegt die Aufgabe zugrunde, einen Außenspiegel der gattungsgemäßen Art derart weiterzubilden, daß die Vibrationsgefahr möglichst weitgehend ausgeschaltet, der Spiegel dabei jedoch konstruktiv vereinfacht und damit vor allem montagefreundlicher ist.

Diese Aufgabe wird erfindungsgemäß durch die Merkmale des Anspruches 1 bzw. 3 gelöst. Dadurch, daß - in an sich bekannter Weise - die Haltevorrichtung als Klemmvorrichtung ausgebildet ist, deren Klemmgegenlager für den Halter einstückig mit der Trägerplatte ausgebildet ist und deren Klemmglied kraftschlüssig mit dem Klemmgegenlager verbindbar ist, ist die Trägerplatte unmittelbar mit dem Halter des Außenspiegels verbunden. Außer dem Klemmglied sind damit keinerlei von der Trägerplatte getrennt ausgeführten Zwischenverbindungsteile zwischen dieser und dem Halter vorhanden, was die Stabilität der Verbindung von Trägerplatte und Halter wesentlich verbessert. Darüber hinaus muß in montagetechnischer Hinsicht eben nur diese Verbindung zwischen der Trägerplatte und dem Halter geschlossen werden was den Montageaufwand bereits beträchtlich verringert. Eine weitere Montagevereinfachung ergibt sich ausgehend von dieser Grundkonstruktion der Klemmvorrichtung durch die kennzeichnenden Merkmale der Ansprüche 1 bzw. 3, die alternative Gehäuseausgestaltungen wiedergeben.

Dabei sind die Gehäuseausgestaltungen gemäß Kennzeichnungsteil der Ansprüche 1 bzw. 3 nicht nur in Verbindung mit der Ausgestaltung der Klemmvorrichtung, sondern auch losgelöst davon mit Vorteil einsetzbar.

Weitere Merkmale, Einzelheiten und Vorteile der Erfindung sind der nachfolgenden Beschreibung entnehmbar, in der Ausführungsbeispiele des Erfindungsgegenstandes anhand der beigefügten Figuren näher erläutert sind. Es zeigen:
- Fig. 1: einen Vertikalschnitt durch einen Außenspiegel in einer ersten Ausführungsform entlang der Schnittlinie I-I nach Fig. 3,
- Fig. 2: einen Vertikalschnitt analog Fig. 1 durch eine zweite Ausführungsform eines Außenspiegels,
- Fig. 3: einen Horizontalschnitt entlang der Schnittlinie III-III nach Fig. 1,
- Fig. 4: eine Ansicht des Außenspiegels aus Pfeilrichtung IV gemäß Fig. 2 ohne Klemmschellen und Abdeckteil,
- Fig. 5: eine dritte Ausführungsform eines Außenspiegels gemäß der Erfindung in Draufsicht,
- Fig. 6: eine Seitenansicht des Spiegels nach Fig. 5 und
- Fig. 7: einen Querschnitt durch den Spiegel nach den Fig. 5 und 6 entlang der Schnittlinie VII-VII nach Fig. 6.

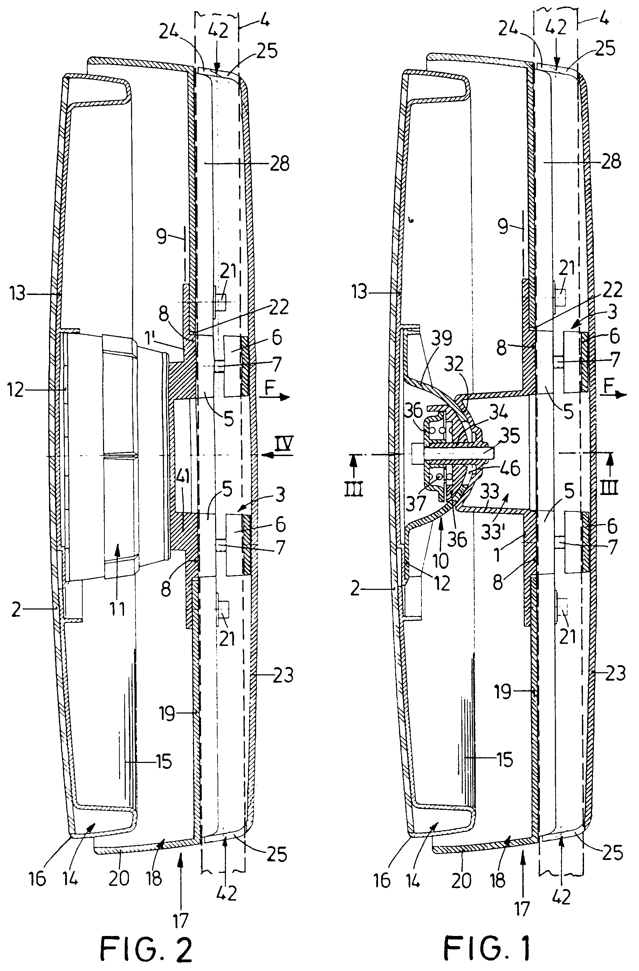

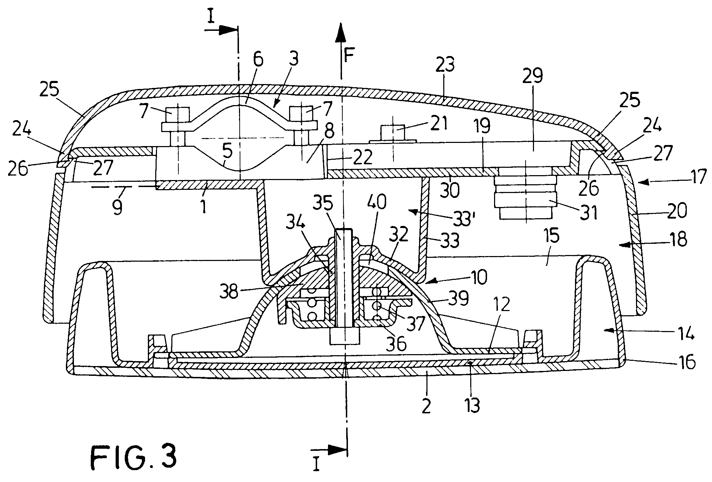

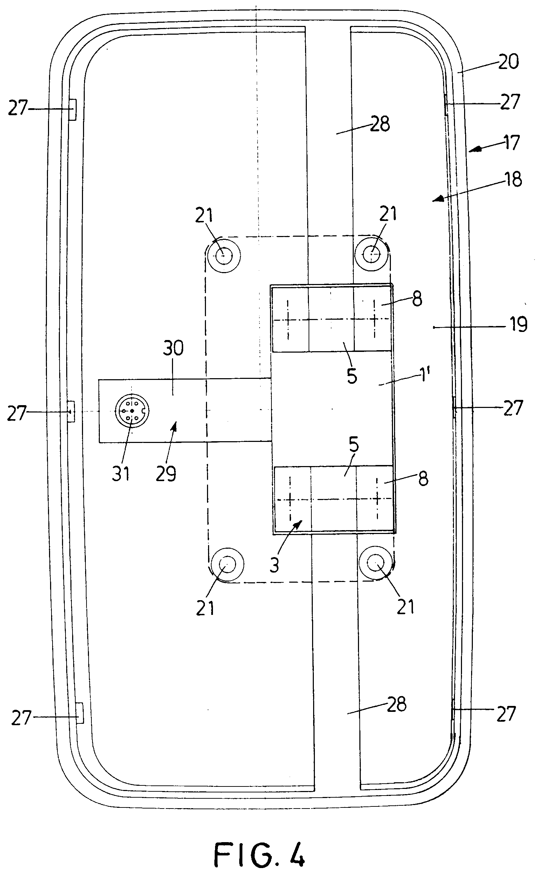

Der in den Fig. 1 bis 4 in zwei unterschiedlichen Ausführungsformen dargestellte Außenspiegel für ein Nutzfahrzeug kann als von Hand (Fig. 1,3) oder motorisch (Fig. 2,4) verstellbarer Außenspiegel konfiguriert sein. Beide Ausführungsformen weisen folgende Gemeinsamkeiten auf:

Als zentrales tragendes Teil der beiden Außenspiegel ist eine Trägerplatte 1,1' vorgesehen, die im wesentlichen vertikal und parallel zur Hauptebene der Spiegelscheibe 2 der Außenspiegel ausgerichtet ist. Auf der der Spiegelscheibe 2 abgewandten, in Fahrtrichtung F weisenden Rückseite der Trägerplatten 1,1' ist jeweils eine Haltevorrichtung 3 zur Halterung der Außenspiegel an einem Stützarm 4 (strichliert dargestellt) vorgesehen. Der Stützarm 4 führt jeweils zur Karosserie des Nutzfahrzeuges und ist dort in einem entsprechenden Lagerbock (nicht dargestellt) befestigt. Die Haltevorrichtung 3 besteht aus zwei in vertikaler Richtung fluchtend miteinander angeordneten Klemmgegenlagern 5, die einstückig mit der Trägerplatte 1,1' ausgebildet sind. Weiterhin ist als Klemmglied an jedem Klemmgegenlager 5 eine Klemmschelle 6 vorgesehen, die mittels der Schrauben 7 kraftschlüssig mit dem zugehörigen Klemmgegenlager 5 verbindbar ist. Die Klemmgegenlager 5 sind dabei in die Oberseite eines flachen, quaderförmigen Vorsprunges 8 eingeformt, die das freie Ende dieses aus der Plattenebene 9 der Trägerplatte 1,1' vorstehenden Vorsprunges 8 bilden.

Auf der der Spiegelscheibe 2 zugewandten Seite ist die Trägerplatte 1,1' mit einem Verstellaggregat zur schwenkbaren und von Hand bzw. motorisch verstellbaren Lagerung der Spiegelscheibe 2 versehen. Bei der in Fig. 1 und 3 gezeigten Ausführungsform besteht das Verstellaggregat aus einem als Kugelgelenk ausgebildeten Schwenklager 10, das im folgenden noch näher beschrieben wird.

Bei der in den Fig. 2 und 4 gezeigten Ausführungsform ist das Verstellaggregat als gekapseltes Schwenkmodul 11 ausgeführt, in das Motorantriebe und ein entsprechender Schwenkmechanismus integriert sind. Bei diesem Schwenkmodul 11 handelt es sich um ein handelsübliches Teil, es bedarf also keiner näheren Erläuterung.

Zur Spiegelscheibe 2 hin weisen die Verstellaggregate (Schwenklager 10, Schwenkmodul 11) der in den Fig. 1 bis 4 gezeigten Spiegel-Ausführungsformen eine Spiegeltragplatte 12 auf, auf die eine Halteplatte 13 für die Spiegelscheibe 2 aufgeschoben und mit Hilfe einer Klemmschlußverbindung festgelegt ist. Diese Klemmschlußverbindung zwischen Halteplatte und Spiegeltragplatte ist in der DE-A-43 02 950, angemeldet am 03.02.93 und veröffentlicht am 04.08.94, näher beschrieben, worauf Bezug genommen wird.

Die Halteplatte 13 ist randseitig mit einer der Spiegelscheibe 2 abgewandten Auswölbung 14 versehen, die einen umlaufenden, blendenartigen Kragen 15 bildet. Die Stirnkante 16 der Halteplatte 13 umfaßt die Spiegelscheibe 2, die auf der Halteplatte 13 z.B. durch Verklebung festgelegt ist.

Das in den beiden Ausführungsformen gemäß den Fig. 1,3 bzw. 2,4 identisch ausgebildete Gehäuse 17 des Spiegels ist zweiteilig aufgebaut und umfaßt ein schalenartiges Gehäuseteil 18, das eine den Schalenboden bildende Basis 19 und eine entgegen der Fahrtrichtung davon etwa rechtwinklig abstehende Wand 20 aufweist. Die Wand 20 läuft rahmenartig um und umgrenzt den Schwenkbereich der Spiegelscheibe 2. Das Gehäuseteil 18 ist von der der Spiegelscheibe 2 abgewandten Seite her an der Trägerplatte 1,1' durch Schrauben 21 befestigt, wobei die beiden aus Klemmgegenlager 5 und Klemmschelle 6 bestehenden Klemmvorrichtungen mittels des Vorsprunges 8 eine Öffnung 22 in der Basis 19 durchgreifen. Damit sind die Klemmvorrichtungen auf der der Spiegelscheibe 2 abgewandten Rückseite der Basis angeordnet.

Weiterhin weist das Gehäuse 17 ein ebenfalls schalenartiges Abdeckteil 23 auf, das zur Abdeckung der Basis 19 des Gehäuseteils 18 und der davor angeordneten Klemmvorrichtung dient. Das Abdeckteil 23 ist von der der Spiegelscheibe 2 abgewandten Seite her auf das Gehäuseteil 18 aufrastbar. Dazu ist das Abdeckteil 23 an der Stirnkante 24 seiner umlaufenden Seitenwand 25 mit Rastnasen 26 versehen, die in entsprechende Rastöffnungen 27 am Gehäuseteil 18 eingreifen.

Aufgrund der gegenseitigen Zuordnung und Befestigung der Trägerplatte 1,1', der daran angeordneten Klemmvorrichtungen, des Gehäuseteils 18 und des Abdeckteils 23 sind die Außenspiegel gemäß den Fig. 1 bis 4 besonders montagefreundlich, da das Anbringen des Gehäuseteils 18 an der Trägerplatte 1,1', deren Verbindung mit dem Stützarm 4 und das Aufrasten des Abdeckteils 23 sukzessive aus einer Richtung, nämlich von der der Spiegelscheibe 2 abgewandten Seite her erfolgen kann.

Die Basis 19 des schalenartigen Gehäuseteils 18 weist weiterhin eine kanalförmige Vertiefung 28 auf ihrer der Spiegelscheibe 2 abgewandten Rückseite auf, die in vertikaler Richtung über die gesamte Höhe der Basis 19 und mit den Klemmgegenlagern 5 der Haltevorrichtung 3 fluchtend verläuft. In Montagestellung nimmt diese Vertiefung 28 den Stützarm 4 teilweise auf.

Quer zur Vertiefung 28 ist ausgehend von der Öffnung 22 in der Basis 19 des Gehäuseteils 18 ein integrierter Kabelkanal 29 für ein (nicht dargestelltes) Steuerkabel vorgesehen. An dem der Öffnung 22 abgewandten Ende des Kabelkanals 29 ist in dessen Boden 30 ein elektrischer Steckverbinder 31 angeordnet, so daß bei der Spiegelmontage ein vorkonfektioniertes Steuerkabel, das z.B. zwischen den beiden Klemmvorrichtungen aus dem Stützarm 4 austritt, in den Kabelkanal 29 eingelegt und mit einem entsprechenden Stecker mit dem Steckverbinder 31 verbunden werden kann. Auch hier ist wieder die Montage von der der Spiegelscheibe 2 abgewandten Seite her gewährleistet. Von dem Steckverbinder 31 aus können entsprechende Steuerkabel zu dem Schwenkmodul 11 führen.

Im übrigen ist in der oberen und unteren Seitenwand 25 des Abdeckteils 23 vertikal fluchtend mit der Vertiefung 28 im Gehäuseteil 18 jeweils eine Durchtrittsöffnung 42 für den Stützarm 4 vorgesehen.

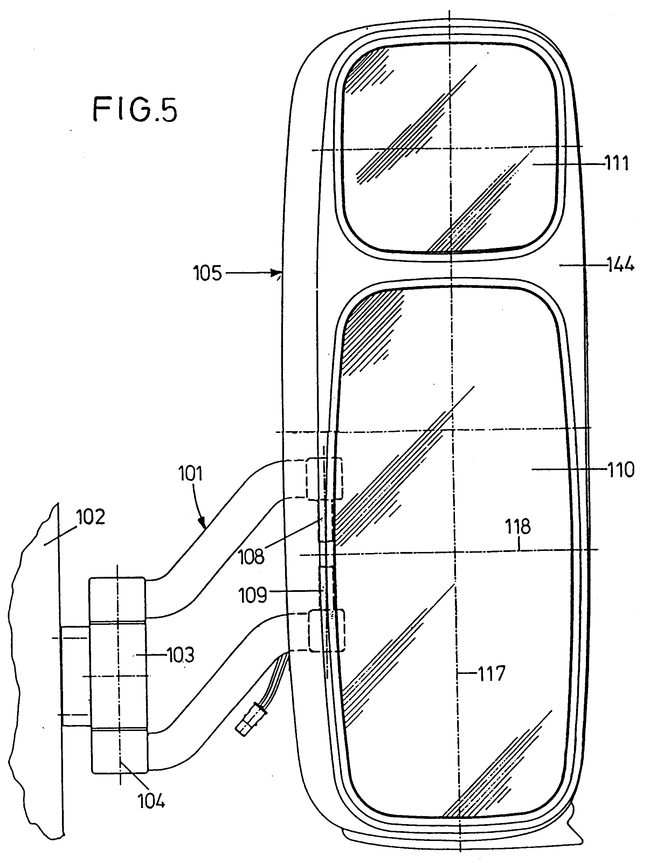

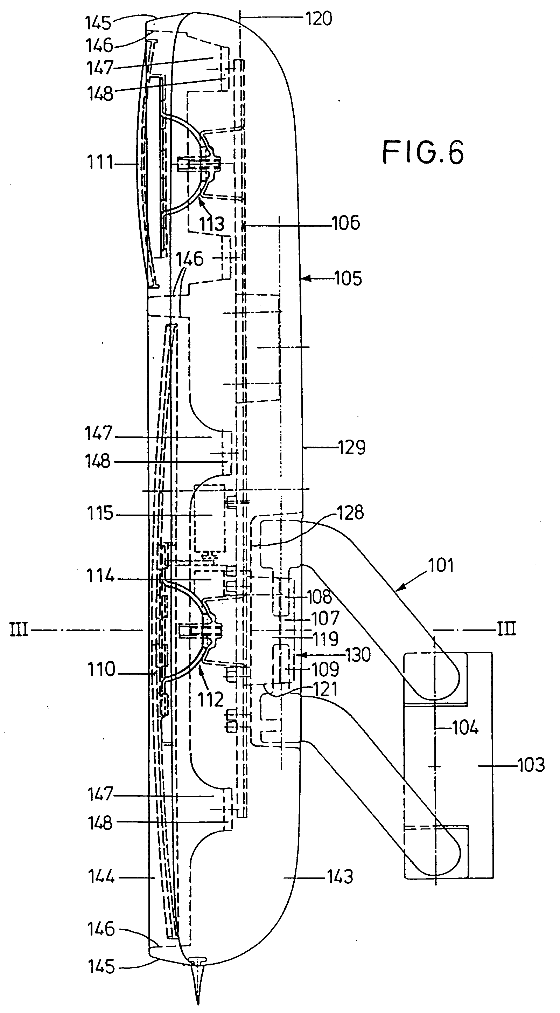

Die in den Fig. 5 bis 7 dargestellte Ausführungsform eines erfindungsgemäßen Außenspiegels für ein Nutzfahrzeug ist als Doppelspiegel ausgebildet. Er weist einen als doppelarmigen Stützarm 101 ausgebildeten Halter zur Befestigung des Spiegels an einem in Fig. 5 schematisch angedeuteten Karosserieteil 102 eines Nutzfahrzeuges auf. Der doppelarmige Stützarm 101 ist karosserieseitig an einem Lagerbock 103 um eine vertikale Achse 104 schwenkbar befestigt.

In einem aerodynamisch geformten Gehäuse 105 des Spiegels ist eine Trägerplatte 106 angeordnet, die mittels einer Haltevorrichtung 107 an den beiden Haltezapfen 108,109 an den freien Enden des doppelarmigen Stützarmes 101 befestigt ist. An dieser Trägerplatte 106 ist direkt das Gehäuse 105 gehalten. An geeigneten Stellen kann die Trägerplatte 106 nicht näher dargestellte Aussparungen zur Gewichtsreduzierung aufweisen.

An der Trägerplatte 106 sind ferner zwei Spiegelscheiben 110,111 mittels jeweils eines als Kugelgelenk ausgebildeten Schwenklagers 112,113 verschwenkbar gelagert. Die untere Spiegelscheibe 110 stellt die nur leicht gewölbte Hauptspiegelscheibe dar, die obere Spiegelscheibe 111 ist ein kleinerer Weitwinkelspiegel.

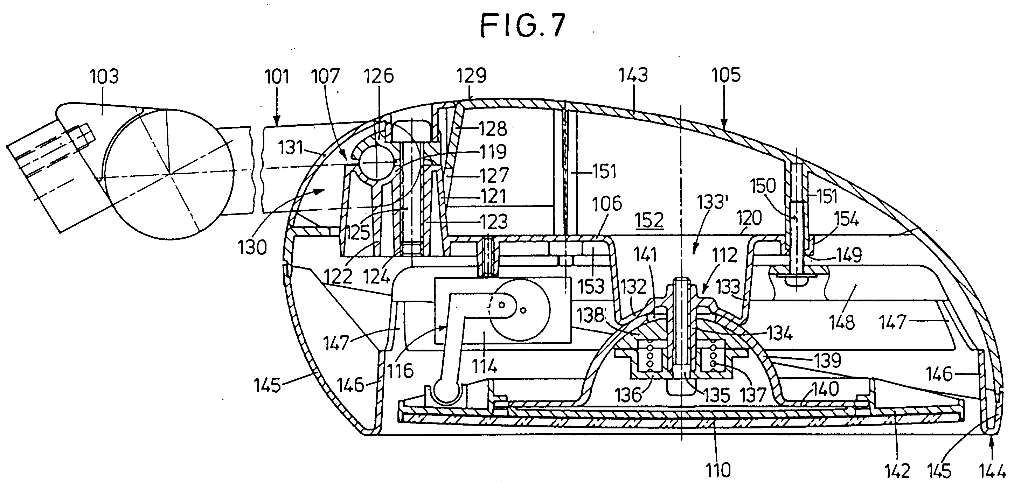

Der unteren Spiegelscheibe 110 sind zwei Verstellaggregate 114,115 in Form elektrischer Getriebemotoren zugeordnet, die mit der Spiegelscheibe 110 jeweils über ein in Fig. 7 angedeutetes Schubkurbelgetriebe 116 gekoppelt sind. Durch die Verstellaggregate 114,115 kann die Spiegelscheibe 110 um zwei zueinander senkrechte Verstellachsen 117,118 verstellt werden, um eine Einstellung der Spiegelscheibe 110 durchzuführen.

Die Haltevorrichtung 107 ist als Klemmvorrichtung ausgebildet, deren Klemmgegenlager 119 für die Haltezapfen 108,109 des Stützarmes 101 einstückig mit der Trägerplatte 106 ausgebildet ist. Das Klemmgegenlager 119 ist dabei am freien Ende eines aus der Plattenebene 120 der Trägerplatte 106 vorstehenden, im wesentlichen quaderförmigen Vorsprunges 121 angeordnet, der auf seiner Innenseite hohl ist und durch einstückig angeformte Versteifungsrippen 122 verstärkt ist. An den Vorsprung 121 ist ferner auf seiner Innenseite eine Hülse 123 einstückig angeformt, die ein Innengewinde 124 für die von außen einschraubbare Befestigungsschraube 125 für die das Klemmglied der Klemmvorrichtung 107 bildende Klemmpratze 126 aufweist. Mittels der Befestigungsschraube 125 ist die Klemmpratze 126 kraftschlüssig mit dem Klemmgegenlager 119 verbindbar, womit die Trägerplatte 106 unter dem Klemmschluß der Klemmvorrichtung fest mit den Haltezapfen 108,109 des Stützarmes 101 verbunden ist.

In der in Fig. 7 gezeigten Montagestellung ragt der Vorsprung 121 durch eine Gehäuseöffnung 127, die im winkelförmig ausgestalteten Boden 128 einer auf der Gehäuseaußenseite 129 angeordneten Gehäusevertiefung 130 angeordnet ist. Klemmgegenlager 119 und Klemmpratze 126 der Klemmvorrichtung 107 sind also auf der Gehäuseaußenseite 129 in der Gehäusevertiefung 130 angeordnet und damit besonders leicht für eine gegenseitige Montage von Spiegel und Stützarm 101 zugänglich. Die Klemmvorrichtung 107 ist durch eine Abdeckhaube 131 nach außen abgedeckt, die innerhalb der Gehäusevertiefung 130 angeordnet ist und von der Befestigungsschraube 125 gehalten wird.

Im folgenden wird die Ausgestaltung des Schwenklagers 10 gem. Fig. 1 und 3 bzw. der beiden Schwenklager 112,113 gemäß Fig. 7 beschrieben. Letztere zeigt das der unteren Spiegelscheibe 110 zugeordnete Schwenklager 112. Das obere Schwenklager 113 ist entsprechend ausgestaltet.

Das Schwenklager 10,112 ist als Kugelgelenk an der Trägerplatte 1,106 ausgestaltet, wobei die Lagerschale 32,132 des Kugelgelenks einstückig mit der Trägerplatte 1,106 ausgebildet ist. Die Lagerschale 32,132 ist dabei am freien Ende eines aus der Plattenebene 9,120 der Trägerplatte 1,106 vorstehenden, ringförmigen Vorsprunges 33,133 angeordnet. Der Vorsprung 33,133 mit der Lagerschale 32,132 ist dabei als hutförmige Auswölbung 33',133' der Trägerplatte 1,106 ausgebildet und erstreckt sich in die dem Vorsprung 8,121 entgegengesetzte Richtung.

Zentral weist die Lagerschale 32,132 eine ebenfalls einstückig mit ihr ausgebildete, vertikal abstehende Gewindehülse 34,134 auf, in der eine Befestigungsschraube 35,135 für eine auf der Gewindehülse 34,134 sitzende Widerlagerkappe 36,136 eingeschraubt ist. An der Innenseite der Widerlagerkappe 36,136 stützt sich eine Druckfeder 37,137 ab, die ein kugelsegmentförmiges Andruckelement 38,138 in Richtung zur Lagerschale 32,132 des Schwenklagers 10,112 beaufschlagt. Zwischen dem Andruckelement 38, 138 und der Lagerschale 32,132 verläuft eine halbkugelförmige Gegenlagerschale 39,139, die an eine ebene Halteplatte 13,140 für die Spiegelscheibe 2,110 angeformt ist. Die Gegenlagerschale 39,139 weist eine zentrale Öffnung 40,141 auf, durch die unter Spiel die Gewindehülse 34,134 hindurchragt.

Analog dem Ausführungsbeispiel gemäß den Fig. 1 bis 4 ist beim Spiegel gemäß den Fig. 5 bis 7 an der Halteplatte 140 eine Spiegeltragplatte 142 lösbar befestigt, mit der die Spiegelglasscheibe 110 durch Verklebung dauerhaft verbunden ist.

Wie aus den Figuren 5 bis 7 weiterhin deutlich wird, ist das Gehäuse 105 dieser dritten Spiegelausführungsform zweiteilig aus einem Gehäusehauptteil 143 und einem die Spiegelscheiben 110, 111 seitlich umgebenden Rahmenteil 144 gebildet. Das Rahmenteil 144 weist dabei einen außenliegenden Randbereich 145 sowie die Ränder der Spiegelscheibe 110,111 mit Abstand flankierende, innenliegende Wandabschnitte 146 auf. Von diesen erstrecken sich in Richtung zur Trägerplatte 106 einstückig angeformte Verbindungsstreben 147, die zwischen ihren Enden jeweils einen parallel zur Trägerplatte 106 verlaufenden Haltesteg 148 aufweisen. Mit diesen Haltestegen 148 ist das Rahmenteil 144 an einstükkig in die Trägerplatte 106 eingeformten Befestigungselementen mittels einer Befestigungsschraube 150 befestigt. Bei diesen Befestigungselementen handelt es sich um Öffnungen 149 in der Trägerplatte 106, die in topfförmigen Vertiefungen angeordnet sind. Die Befestigungsschrauben halten gleichzeitig das Gehäusehauptteil 143, in dem die Befestigungsschrauben 150 die Öffnungen 149 an der Trägerplatte 106 durchgreifen und in Gewindehülsen 151 am Gehäusehauptteil 143 eingreifen, die einstückig mit dem Gehäusehauptteil 143 ausgebildet sind. Das Gehäusehauptteil 143 und das Rahmenteil 144 sind also von den einander abgewandten Flachseiten 152, 153 der Trägerplatte 106 her mit dieser und gegenseitig verbunden. Trägerplatte 106, Gehäusehauptteil 143 und Rahmenteil 144 sind also nach Art einer Sandwich-Konstruktion gegenseitig miteinander verbunden.

Zum Ausführungsbeispiel gemäß den Fig. 2 und 4 bleibt zu ergänzen, daß das Schwenkmodul 11 auf einem flachzylindrischen Vorsprung 41 der Trägerplatte 1' in geeigneter Weise angebracht ist.

Hinsichtlich der Montage der Spiegelscheiben 2,110,111 und den zugeordneten Verstellaggregaten (Schwenklager 10, Schwenkmodul 11, Schwenklager 12,113, Verstellaggregate 114,115) ist erwähnenswert, daß alle Montageschritte in diesem Zusammenhang von der der Spiegelscheibe 2, 110,111 zugewandten Seite der Trägerplatte 1,1',106 her erfolgen. Auch dies ist der Montagefreundlichkeit dienlich.

Als Vorteil der Erfindung bleibt zu ergänzen, daß die Bauteile der Spiegel von ihrer Materialauswahl her und durch die konstruktive Art ihres Zusammenfügens eine optimale Trennbarkeit zwischen Metall und Kunststoff beim Recycling gewährleisten.

## Patentansprüche

1. Außenspiegel für Nutzfahrzeuge mit
- einem Halter (101) zur Befestigung des Spiegels am Nutzfahrzeug (102),
- einer in einem Gehäuse (105) angeordneten Trägerplatte (106), die mittels einer Haltevorrichtung (107) am Halter (101) befestigt und an der das Gehäuse (105) gehalten ist,
- mindestens einer verschwenkbar an der Trägerplatte (106) angebrachten, am Gehäuse (105) angeordneten Spiegelscheibe (110,111) und
- mindestens einem Verstellaggregat (114,115, 112,113), das an der Trägerplatte (106) angebracht und das mit der mindestens einen Spiegelscheibe (110) zu deren Verschwenkung verbunden ist, wobei die Haltevorrichtung (107) als Klemmvorrichtung ausgebildet ist, deren mindestens eines Klemmgegenlager (119) für den Halter (101) einstückig mit der Trägerplatte (106) ausgebildet ist und deren Klemmglied (126) kraftschlüssig mit dem mindestens einen Klemmgegenlager (119) verbindbar ist, **dadurch gekennzeichnet, daß** die Trägerplatte (106) mit einstückig angeformten Befestigungselementen (149) zur Befestigung eines Gehäusehauptteils (143) und eines mit diesem das Gehäuse (105) bildenden, die Spiegelscheibe (110,111) seitlich umgebenden Rahmenteils (144) an der Trägerplatte (106) versehen ist.

2. Außenspiegel nach Anspruch 1, **dadurch gekennzeichnet, daß** das Gehäusehauptteil (143) und das Rahmenteil (144) von den einander abgewandten Flachseiten (152,153) der Trägerplatte (106) her mit dieser und gegenseitig verbunden sind.

3. Außenspiegel für Nutzfahrzeuge mit
- einem Halter (4) zur Befestigung des Spiegels am Nutzfahrzeug,
- einer in einem Gehäuse (17) angeordneten Trägerplatte (1,1'), die mittels einer Haltevorrichtung (3) am Halter (4) befestigt und an der das Gehäuse (17) gehalten ist,
- mindestens einer verschwenkbar an der Trägerplatte (1,1') angebrachten, am Gehäuse (17) angeordneten Spiegelscheibe (2) und
- mindestens einem Verstellaggregat (10, 11), das an der Trägerplatte (1,1') angebracht und das mit der mindestens einen Spiegelscheibe (2) zu deren Verschwenkung verbunden ist, wobei die Haltevorrichtung (3) als Klemmvorrichtung ausgebildet ist, deren mindestens eines Klemmgegenlager (5) für den Halter (4) einstückig mit der Trägerplatte (1,1') ausgebildet ist und deren Klemmglied (6) kraftschlüssig mit dem mindestens einen Klemmgegenlager (5) verbindbar ist, **dadurch gekennzeichnet, daß** an der Trägerplatte (1,1') ein Gehäuseteil (18) angeordnet ist, das mit einer rahmenartig umlaufenden Wand (20) den Schwenkbereich der Spiegelscheibe (2) seitlich umgrenzt und das mit einer die Wand (20) tragenden Basis (19) von der der Spiegelscheibe (2) abgewandten Seite her an der Trägerplatte (1,1') befestigt ist, wobei die mindestens eine Klemmvorrichtung (5, 6) an der Trägerplatte (1, 1') eine Öffnung (22) in der Basis (19) durchgreift und auf der der Spiegelscheibe (2) abgewandten Rückseite der Basis (19) angeordnet ist.

4. Außenspiegel nach Anspruch 3, **dadurch gekennzeichnet, daß** ein Abdeckteil (23) zur Abdeckung der mindestens einen Klemmvorrichtung (5, 6) und der Basis (19) des Gehäuseteils (18) von der der Spiegelscheibe (2) abgewandten Seite her mit dem Gehäuseteil (18) verbindbar, insbesondere darauf aufrastbar (26, 27) ist.

5. Außenspiegel nach Anspruch 3 oder 4, **dadurch gekennzeichnet, daß** die Basis (19) des Gehäuseteils (18) auf ihrer der Spiegelscheibe (2) abgewandten Rückseite mit einer kanalförmigen Vertiefung (28) zur zumindest teilweisen Aufnahme des Halters (4) versehen ist.

6. Außenspiegel nach einem der Ansprüche 3 bis 5, **dadurch gekennzeichnet, daß** die Basis (19) des Gehäuseteils (18) auf ihrer der Spiegelscheibe (2) abgewandten Rückseite mit einem Kabelkanal (29) für ein Steuerkabel versehen ist, der ausgehend von dem der Klemmvorrichtung (5, 6) benachbarten Bereich der Basis (19) zu einem daran angeordneten, elektrischen Steckverbinder (31) führt.

7. Außenspiegel nach einem der Ansprüche 1 bis 6, **dadurch gekennzeichnet, daß** das Klemmgegenlager (5;119) am freien Ende eines aus der Plattenebene (9; 120) der Trägerplatte (1,1';106) vorstehenden Vorsprungs (8;121) angeordnet ist.

8. Außenspiegel nach Anspruch 7, **dadurch gekennzeichnet, daß** der Vorsprung (121) durch eine Gehäuseöffnung (127) ragt, die im Boden (128) einer auf der Gehäuseaußenseite (129) angeordneten Gehäusevertiefung (130) des Gehäuses (105) angeordnet ist.

9. Außenspiegel nach Anspruch 8, **dadurch gekennzeichnet, daß** das Klemmgegenlager (119) und Klemmglied (126) der Klemmvorrichtung (107) auf der Gehäuseaußenseite (129) in der Gehäusevertiefung (130) angeordnet sind.

10. Außenspiegel nach einem der Ansprüche 1 bis 9, **dadurch gekennzeichnet, daß** die Klemmvorrichtung zwei einstückig mit der Trägerplatte (1,1';106) ausgebildete Klemmgegenlager (5;119) aufweist, deren Klemmglied (6;126) jeweils kraftschlüssig mit dem Klemmgegenlager verbindbar ist.

11. Außenspiegel nach Anspruch 1, 3, 7 oder 10, **dadurch gekennzeichnet, daß** die mindestens eine Klemmvorrichtung (5;119 und 6;126) auf der der Spiegelscheibe (2;110,111) abgewandten Seite der Trägerplatte (1,1';106) angeordnet ist.

12. Außenspiegel nach einem der Ansprüche 1 bis 11, **dadurch gekennzeichnet, daß** an der Trägerplatte (1,1';106) mindestens ein als Kugelgelenk ausgebildetes Schwenklager (10;112,113) zur verschwenkbaren Lagerung der mindestens einen Spiegelscheibe (2;110,111) angeordnet ist, wobei die Lagerschale (32;132) des mindestens einen Kugelgelenkes (10; 112,113) einstückig mit der Trägerplatte (1,1';106) ausgebildet ist.

13. Außenspiegel nach Anspruch 12, **dadurch gekennzeichnet, daß** die Lagerschale (32;132) am freien Ende eines aus der Plattenebene (9;120) der Trägerplatte (1,1';106) vorstehenden Vorsprunges (33;133) angeordnet ist.

14. Außenspiegel nach Anspruch 13, **dadurch gekennzeichnet, daß** der Vorsprung (33;133) mit der Lagerschale (32;132) als hutförmige Auswölbung (33';133') der Trägerplatte (1,1';106) ausgebildet ist.

## Claims

1. An external rear-view mirror for commercial vehicles comprising
- a holder (101) for the attachment of the mirror to the commercial vehicle (102),
- a support plate (106) arranged in a housing (105) and secured to the holder (101) by means of a holding device (107) and on which the housing (105) is retained,
- at least one mirror glass (110, 111) pivotably supported on the support plate (106) and arranged on the housing (105) and
- at least one positioning aggregate (114, 115, 112, 113), which is arranged on the support plate (106) and which is connected with the at least one mirror glass (110) for its pivoting,
wherein the holding device (107) is formed as a clamping device, of which the clamping thrust bearing (119) for the holder (101) is formed in one piece with the support plate (106) and of which the clamping member (126) is non-positively connectable with the at least one clamping thrust bearing (119), **characterized in that** the support plate (106) is provided with integrally formed fastening elements (149) for fastening a housing main part (143) and a frame part (144) to the support plate (106), which frame part (144) together with the housing main part (143) forms the housing (105) and laterally surrounds the mirror glass (110, 111).

2. An external rear-view mirror according to claim 1, **characterized in that** the housing main part (143) and the frame part (144) are connected with each other and with the support plate (106) from the direction of the flat sides (152, 153) facing away from each other, of the support plate (106).

3. An external rear-view mirror for commercial vehicles comprising
- a holder (4) for the attachment of the mirror to the commercial vehicle,
- a support plate (1, 1') arranged in a housing (17) and secured to the holder (4) by means of a holding device (3) and on which the housing (17) is retained,
- at least one mirror glass (2) pivotably supported on the support plate (1, 1') and arranged on the housing (17) and
- at least one positioning aggregate (10, 11), which is arranged on the support plate (1, 1') and which is connected with the at least one mirror glass (2) for its pivoting,
wherein the holding device (3) is formed as a clamping device, of which the clamping thrust bearing (5) for the holder (4) is formed in one piece with the support plate (1, 1') and of which the clamping member (6) is non-positively connectable with the at least one clamping thrust bearing (5), **characterized in that** a housing member (18) laterally defining the pivoting range of the mirror glass (2) by a wall (20) extending in the way of a frame is arranged on the support plate (1, 1') and is secured to the support plate (1, 1') with a base (19) supporting the wall (20) from the side facing away from the mirror glass (2), the at least one clamping device (5, 6) on the support plate (1, 1') passing through an opening (22) in the base (19) and being arranged on the rear of the base (19) facing away from the mirror glass (2).

4. An external rear-view mirror according to claim 3, **characterized in that** a cover (23) for covering the at least one clamping device (5, 6) and the base (19) of the housing member (18) is connectable with, in particular lockable onto (26, 27), the housing member (18) from the side facing away from the mirror glass (2).

5. An external rear-view mirror according to claim 3 or 4, **characterized in that** on its rear facing away from the mirror glass (2) the base (19) of the housing member (18) is provided with a conduit-like recess (28) for the at least partial accommodation of the holder (4).

6. An external rear-view mirror according to one of claims 3 to 5, **characterized in that** on its rear facing away from the mirror glass (2) the base (19) of the housing member (18) is provided with a cable duct (29) for a control cable, which duct (29) proceeding from the portion of the base adjacent to the clamping device (5, 6) leads to an electric plug connector (31) arranged thereon.

7. An external rear-view mirror according to one of claims 1 to 6, **characterized in that** the clamping thrust bearing (5; 119) is arranged at the free end of a projection (8; 121) projecting from the plate plane (9; 120) of the support plate (1, 1'; 106).

8. An external rear-view mirror according to claim 7, **characterized in that** the projection (121) projects through a housing opening (127), which is arranged in the bottom (128) of a housing recess (130), arranged on the housing outside (129), of the housing (105).

9. An external rear-view mirror according to claim 8, **characterized in that** the clamping thrust bearing (119) and the clamping member (126) of the clamping device (107) are arranged on the housing outside (129) in the housing recess (130).

10. An external rear-view mirror according to one of claims 1 to 9, **characterized in that** the clamping device has two clamping thrust bearings (5; 119) integrally formed with the support plate (1, 1'; 106), the clamping member (6; 126) of which clamping thrust bearings (5; 119) are non-positively connectable with the clamping thrust bearing.

11. An external rear-view mirror according to claim 1, 3, 7 or 10, **characterized in that** the at least one clamping device (5; 119, and 6; 126) is arranged on the side of the support plate (1, 1'; 106) facing away from the mirror glass (2; 110, 111).

12. An external rear-view mirror according to claim 1 to 11, **characterized in that** at least one pivot bearing (10; 112, 113) formed as a ball-and-socket joint is arranged on the support plate (1, 1'; 106) for pivotably supporting the at least one mirror glass (2; 110, 111), the bearing shell (32; 132) of the at least one ball-and-socket joint (10; 112, 113) being formed in one piece with the support plate (1, 1'; 106).

13. An external rear-view mirror according to claim 12, **characterized in that** the bearing shell (32; 132) is arranged at the free end of a projection (33; 133) projecting from the plate plane (9; 120) of the support plate (1, 1'; 106).

14. An external rear-view mirror according to claim 13, **characterized in that** the projection (33; 133) with the bearing shell (32; 132) is formed as a hat-like convexity (33'; 133') of the support plate (1, 1'; 106).

## Revendications

1. Rétroviseur extérieur pour véhicules utilitaires comprenant une embase (101) de fixation du rétroviseur au véhicule (102), une plaque de support (106) disposée dans un boîtier (105), rattachée par un dispositif de fixation (107) à l'embase (101) et sur laquelle est fixé le boîtier (105), au moins un miroir (110, 111) disposé dans le boîtier (105) et rapporté de manière orientable sur la plaque de support (106), et au moins un bloc de réglage (114, 115) rapporté sur la plaque de support (106) et relié avec au moins un miroir (110) pour son inclinaison, ledit dispositif de fixation (107) étant un dispositif de blocage dont au moins une butée (119) pour l'embase (101) est constituée d'une seule pièce avec la plaque de support (106) et dont l'organe de blocage (126) coopère avec ladite butée (119), caractérisé en ce que la plaque de support (106) présente des éléments de fixation (149) constitués d'une seule pièce avec ladite plaque de support (106) pour la fixation sur la plaque de support (106) d'une pièce principale (143) du boîtier et celle d'une pièce d'encadrement (144) du miroir (110, 111), lesdites pièces constituant à elles deux le boîtier (105).

2. Rétroviseur extérieur selon la revendication 1, caractérisé en ce que la pièce principale (143) du boîter et la pièce d'encadrement (144) sont fixées à partir des plats en regard (152, 153) de la plaque de support (106) avec cette dernière et entre elles.

3. Rétroviseur extérieur pour véhicules utilitaires, comprenant une embase (4) de fixation du rétroviseur au véhicule, une plaque de support (1, 1') disposée dans un boîtier (17), rattachée par un dispositif de fixation (3) à l'embase (4) et sur laquelle est fixé le boîtier (17), au moins un miroir (2) disposé dans le boîtier (17) et rapporté de manière orientable sur la plaque de support (1, 1'), et au moins un bloc de réglage (10, 11) rapporté sur la plaque de support (1, 1') et relié avec au moins un miroir (2) pour son inclinaison, ledit dispositif de fixation (3) étant un dispositif de blocage dont au moins une butée (5) pour ladite embase (4) est constituée d'une seule pièce avec la plaque de support (1, 1') et dont l'organe de blocage (6) coopère avec ladite butée (5), caractérisé en ce que sur la plaque de support (1, 1') est disposée une pièce de boîtier (18) bordant latéralement par une paroi formant cadre (20) la zone orientable du miroir (2) et fixée sur la face opposée au miroir (2) à la plaque de support (1, 1') par une base (19) portant la paroi (20), le dispositif de blocage (5, 6), au nombre d'au moins un, porté par la plaque de support (1,1') pénétrant dans une ouverture (22) de la base (19) et se trouvant disposé sur là face arrière de la base (19) opposée au miroir (2).

4. Rétroviseur extérieur selon la revendication 3, caractérisé en ce du'un cache (23) recouvrant le dispositif de blocage (5, 6) et la base (19) de la pièce de boîtier (18) peut être relié à ladite pièce de boîtier (18), en particulier par des moyens d'encliquetage (26, 27), à partir du côté opposé au miroir (2).

5. Rétroviseur extérieur selon l'une des revendications 3 ou 4, caractérisé en ce que la base (19) de la pièce de boîtier (18) est pourvue sur sa face arrière opposée au miroir (2) d'une dépression formant canal (28) permettant de recevoir au moins partiellement l'embase (4).

6. Rétroviseur extérieur selon l'une des revendications 3 à 5, caractérisé en ce que la base (19) de la pièce de boîtier (18) est pourvue sur sa face arrière opposée au miroir (2) d'un canal (29) pour câble de télécommande partant de la zone de la base (19) contiguë au dispositif de blocage (5, 6) et débouchant sur un connecteur électrique à fiches (31) disposé sur la base (19).

7. Rétroviseur extérieur selon l'une des revendications 1 à 6, caractérisé en ce que la butée de blocage (5; 119) est disposée a l'extrémité libre d'une protubérance (8; 121) formant saillie sur le plan (9; 120) de la plaque de support (1, 1'; 106).

8. Rétroviseur extérieur selon la revendication 7, caractérisé en ce que la protubérance (121) fait saillie à travers une ouverture du boîtier (127) ménagée dans le fond (128) d''une dépression (130) du boîtier (105) sur la face extérieure (129) de celui-ci.

9. Rétroviseur extérieur selon la revendication 8, caractérisé en ce que la butée (119) et l'organe de blocage (126) du dispositif de blocage (107) sont disposés sur la face extérieure (129) du boîtier dans ladite dépression (130) du boîtier.

10. Rétroviseur extérieur selon l'une des revendications 1 à 9, caractérisé en ce que le dispositif de blocage présente deux butées (5; 119) constituées d'une pièce avec la plaque de support (1, 1; 106) et dont l'organe de blocage (6; 126) coopère avec la butée correspondante.

11. Rétroviseur extérieur selon l'une des revendications 1, 3, 7 ou 10, caractérisé en ce que le dispositif de blocage (5; 119 et 6; 126), au nombre d'au moins un, est disposé sur la face de la plaque de support (1, 1'; 106) opposée au miroir (2; 110, 111).

12. Rétroviseur extérieur selon l'une des revendications 1 à 11, caractérisé en ce que sur la plaque de support (1, 1'; 106) est disposé au moins un joint sphérique formant palier d'orientation (10; 112, 113) pour rendre le miroir (2; 110, 111) orientable, la coquille de palier (32; 132) du joint sphérique (10; 112, 113) étant constituée d'une pièce avec la plaque de support (1, 1'; 106).

13. Rétroviseur extérieur selon la revendication 12, caractérisé en ce que la coquille de palier (32; 132) est disposée à l'extrémité libre d'une protubérance (33; 133) formant saillie sur le plan (9; 120) de la plaque de support (1, 1'; 106).

14. Rétroviseur extérieur selon la revendication 13, caractérisé en ce que ladite protubérance (33; 133) portant la coquille de palier (32; 132) est constituée par une excroissance en forme de chapeau (33'; 133') de la plaque de support (1, 1'; 106).
